# EUROPEAN PATENT APPLICATION

(11) **EP 4 817 731 A1**
(43) Date of publication of application: **07.10.2026**
(21) Application number: 26170131.2
(22) Date of filing: 01.04.2026
(51) Int. Cl.: B01J 13/14

(54) **THERMALLY EXPANDABLE MICROSPHERES**

(30) Priority: 02.04.2025 EP 25168022
(71) Applicant: Nouryon Chemicals International B.V., 1101 BZ Amsterdam (NL)
(72) Inventor: JONSSON, Karl Magnus, 1101 BZ Amsterdam (NL); GÄRD, Johan Erik, 1101 BZ Amsterdam (NL)
(74) Representative: Ingrassia, Fisher & Lorenz UK Ltd.

(57) **Abstract**

The present disclosure relates to thermoplastic thermally expandable microspheres comprising a polymer shell and a propellant, wherein the polymer shell is made from ethylenically unsaturated monomers and encapsulates the propellant, and wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 12 to 25 weight%, each based on the total weight of ethylenically unsaturated monomers, and wherein the thermoplastic thermally expandable microspheres comprise the propellant in an amount of at least 21 weight%, based on the total weight of the thermoplastic thermally expandable microspheres, and wherein the thermally expandable microspheres comprise a silica.

## Description

### Technical Field

The invention relates to thermoplastic thermally expandable microspheres and expanded microspheres that are suitable for use in paper and board applications. The invention further relates to a process for preparing such thermoplastic thermally expandable microspheres and an aqueous slurry comprising such thermoplastic thermally expandable microspheres.

### Background Art

Thermally expandable microspheres are known in the art, and are described for example in US3615972, WO 00/37547 and WO2007/091960. A number of examples are sold under the trade name Expancel^{®}. They can be expanded to form extremely low weight and low density fillers, and find use in applications such as foamed or low density resins, paints and coatings, cements, inks and crack fillers. Consumer products that often contain expandable microspheres include lightweight shoe soles (for example for running shoes), textured coverings such as wallpaper, solar reflective and insulating coatings, food packaging sealants, wine corks, artificial leather, foams for protective helmet liners, and automotive weather strips.

Thermally expandable polymer microspheres usually comprise a thermoplastic polymeric shell, with a hollow core comprising a propellant (or - as also often called - a blowing agent) which expands on heating. Examples of propellants include low boiling hydrocarbons or halogenated hydrocarbons, either condensed or liquid at room temperature, that vaporize on heating. To produce expanded microspheres, the expandable microspheres are heated, such that the thermoplastic polymeric shell softens, and the propellant vaporizes and expands, thus expanding the microsphere. Typically, the microsphere diameter can increase between 1.5 and 8 times during expansion. Expandable microspheres are marketed in various forms, e.g. as dry free-flowing particles, as aqueous slurry or as a partially dewatered wet cake. The heating of the expandable microspheres can be performed using various techniques. One commonly used technique is the so-called wet expansion technique wherein the microspheres are expanded in water which is heated up to boiling temperature. If higher temperatures for expansion are required, expansion can be performed using for instance high-energy steam techniques.

Expandable microspheres can be produced by polymerizing ethylenically unsaturated monomers in the presence of a propellant, for example using a suspension-polymerization process. Typical monomers include those based on acrylates, acrylonitriles, acrylamides, halogen-containing monomers, such as vinylidene chloride (VDC), and styrenes. Usually, mixtures of such monomers are used so to produce expandable microspheres with a co-polymer shell.

Expandable microspheres with a co-polymer shell based on either VDC and acrylonitrile (AN), or AN and methacrylonitrile (MAN), are often used in the production of wet thermally expandable microspheres. These microspheres are distinguished in that the polymer shell have excellent barrier properties towards the encapsulated propellant also in the wet state even though water can act as a plasticizer in the microsphere shell. If the polymer shell is plasticized, the propellant is lost through diffusion and the microsphere's properties deteriorates. This can be seen either already during the expansion in a water environment, or during storage of wet expanded thermally expandable microspheres.

Halogen-containing microspheres and in particular VDC-containing microspheres have been found to have excellent barrier properties due to crystalline polyvinylidene chloride (PVDC) moieties in the polymer shell, which also limits the plasticizing effect of water because of the hydrophobic nature of PVDC. Another benefit of these expandable VDC-containing microspheres is their expansion at relatively low temperatures due to the low glass transition temperature (Tg), i.e., the softening temperature of the polymer shell, which enables the expansion of these expandable VDC-containing microspheres in boiling water. However, major drawbacks with these microspheres are the high halogen content due to the PVDC which makes them far from sustainable. Furthermore, there are often health, safety, and environment (HSE)-concerns regarding these VDC-containing microspheres because of significant amounts of residual VDC since it is often difficult to polymerize to high conversions of VDC into PVDC.

There have been attempts to overcome these sustainability- and HSE-issues with a halogen free AN-co-MAN polymer shell. However, other challenges arise as these microspheres typically require temperatures above 150 °C for efficient expansion. This presents a problem for the paper and board technology sector, which typically uses boiling water or steam (generally having a temperature of about 110 °C) as the heat source to expand the microspheres used in those products.

EP4454746 discloses VDC-free expandable microspheres that solve the storage stability issues identified for the expandable microspheres of WO2007/091960 A1. Whilst the VDC-free expandable microspheres of EP4454746 were found to possess a working expansion temperature range extending as low as 110 °C, subsequent studies have found that the expansion efficiency of those expandable microspheres is insufficient at expansion temperatures of about 110 °C (i.e., the working expansion temperature for paper and board applications). As such, those expandable microspheres do not have sufficient expansion performance characteristics to act as a direct replacement in paper and board applications for the VDC-containing benchmark microspheres, such as those going by the tradename Expancel^{®} 820SLU40 (Nouryon), which have been proven to possess exceptional expansion properties in paper and board applications and as such have been very commercially successful in those applications.

Accordingly, there remains a need for thermoplastic thermally expandable microspheres which are essentially free from halogen-containing monomers, and in particularly essentially free from VDC, and which have excellent expansion efficiency at the working expansion temperature for paper and board applications (ca. 110 °C) such that they can suitably replace the VDC-containing benchmark microspheres.

The present invention is, therefore, directed to finding such expandable polymeric microspheres. Surprisingly, it has been found that these objects can be achieved by a specific combination of monomers for the polymeric shell of the expandable microspheres in specific amount ranges which is further combined with a particular amount of propellant contained in the expandable microspheres and further combined with a silica, preferably a colloidal silica.

### Summary of Invention

In a first aspect, the present invention is directed to thermoplastic thermally expandable microspheres comprising a polymer shell and a propellant, wherein the polymer shell is made from ethylenically unsaturated monomers and encapsulates the propellant, and wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 12 to 25 weight%, each based on the total weight of ethylenically unsaturated monomers, and wherein the thermoplastic thermally expandable microspheres comprise the propellant in an amount of at least 21 weight%, based on the total weight of the thermoplastic thermally expandable microspheres, wherein the thermally expandable microspheres comprise a silica, and wherein the propellant comprises or consists of one or more volatile compounds having a boiling point of less than -5°C.

In a second aspect, the present invention is directed to an aqueous slurry comprising the above thermoplastic thermally expandable microspheres according to the first aspect or obtained from the above method according to the second aspect.

In a third aspect, the present disclosure relates to expanded thermoplastic microspheres obtained by heating the thermoplastic thermally expandable microspheres according to the first aspect or the aqueous slurry of the second aspect at a temperature of about 100 °C to about 120 °C.

In a fourth aspect, the present disclosure relates to a paper or board product comprising the thermoplastic thermally expandable microspheres according to the first aspect or the expanded thermoplastic microspheres according to the third aspect.

### Brief Description of Drawings

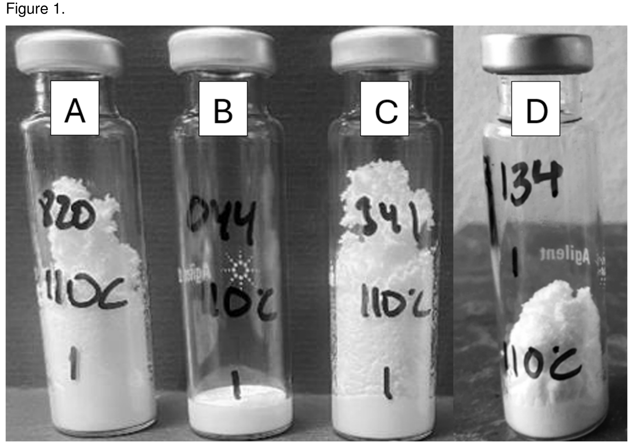

Figure 1 is a photograph of the expanded samples obtained by expanding the expandable microsphere slurries of Examples 1-4 at 110 °C (Figure 1A = Example 4; Figure 1B = Example 1; Figure 1C = Example 2; Figure 1D = Example 3).

### Description of Embodiments

In a first aspect, the present invention discloses thermoplastic thermally expandable microspheres comprising a polymer shell and a propellant, wherein the polymer shell is made from ethylenically unsaturated monomers and encapsulates the propellant, and wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 12 to 25 weight%, each based on the total weight of ethylenically unsaturated monomers, and wherein the thermoplastic thermally expandable microspheres comprise the propellant in an amount of at least 21 weight%, based on the total weight of the thermoplastic thermally expandable microspheres, wherein the thermally expandable microspheres comprise a silica, preferably a colloidal silica, and wherein the propellant comprises or consists of one or more volatile compounds having a boiling point of less than -5°C.

The ethylenically unsaturated monomers preferably comprise acrylonitrile in an amount from 50 to 75 weight%, more preferably from 53 to 70 weight%, and most preferably from 55 to 65 weight%, such as from 57 to 61 weight%, each based on the total weight of ethylenically unsaturated monomers.

The ethylenically unsaturated monomers preferably comprise methacrylonitrile in an amount from 15 to 40 weight%, more preferably from 20 to 35 weight%, such as from 21 to 33 weight%, and most preferably from 22 to 30 weight%, such as from 23 to 28 weight%, each based on the total weight of ethylenically unsaturated monomers.

The ethylenically unsaturated monomers preferably comprise methyl acrylate and/or methyl methacrylate in an amount of from 13 to 23 weight%, such as from 14 to 20 weight%, each based on the total weight of ethylenically unsaturated monomers.

The total weight of the ethylenically unsaturated monomers for the polymeric shell of the thermoplastic thermally expandable microspheres amounts to 100 weight%.

According to a preferred embodiment, the polymer shell of the thermoplastic thermally expandable microspheres of the present invention is made from ethylenically unsaturated monomers comprising acrylonitrile in an amount from 55 to 65 weight%, methacrylonitrile in an amount of from 22 to 30 weight%, and methyl acrylate and/or methyl methacrylate in an amount of 13 to 23 weight%, each based on the total weight of ethylenically unsaturated monomers.

According to a particularly preferred embodiment, the polymer shell of the thermoplastic thermally expandable microspheres of the present invention is made from ethylenically unsaturated monomers comprising acrylonitrile in an amount from 57 to 61 weight%, methacrylonitrile in an amount of from 23 to 28 weight%, and methyl acrylate and/or methyl methacrylate in an amount of 14 to 20 weight%, each based on the total weight of ethylenically unsaturated monomers.

In a further preferred embodiment, the polymer shell of the thermoplastic thermally expandable microspheres of the present invention is made from ethylenically unsaturated monomers comprising methyl acrylate in any of the amount ranges as specified above for the methyl acrylate and/or methyl methacrylate.

In an even further preferred embodiment, the ethylenically unsaturated monomers are substantially free from VDC. If included, the amount of VDC is less than 5 weight%, most preferably less than 2 weight% or even less than 1 weight% of the ethylenically unsaturated monomers, such as less than 0.5 weight% or even less than 0.1 weight% of the ethylenically unsaturated monomers. It is further preferred that the ethylenically unsaturated monomers are substantially free from any halogen containing monomers. If included, the amount of halogen containing monomers is preferably less than 5 weight%, most preferably less than 2 weight% or even less than 1 weight% of the ethylenically unsaturated monomers, such as less than 0.5 weight% or even less than 0.1 weight% of the ethylenically unsaturated monomers. In some embodiments, the ethylenically unsaturated monomers do not include any VDC and/or halogen containing monomers at all.

In a further preferred embodiment, the ethylenically unsaturated monomers comprises more methacrylonitrile than methyl acrylate and/or methyl methacrylate on a weight basis. Particularly preferred is that the ethylenically unsaturated monomers comprises more methacrylonitrile than methyl acrylate on a weight basis. For instance, the ethylenically unsaturated monomers comprises at least 1 weight% more, preferably at least 2 weight% more, more preferably at least 3 weight% more and most preferably at least 5 weight% more methacrylonitrile than methyl acrylate and/or methyl methacrylate on a weight basis It has been found that such weight excess of methacrylonitrile compared to methyl acrylate further improves the storage stability of the microspheres after expansion.

The ethylenically unsaturated monomers may comprise additional monomers, for instance in an amount up to 20 weight%, such as from 0 up to 15 weight% or from 0.1 to 12 weight%, preferably up to 10 weight% such as from 0.2 to 8 weight%, and more preferably up to 5 weight%, such as up to 2 weight%, each based on the total weight of ethylenically unsaturated monomers. Suitable additional monomers include for example (meth)acrylates; vinyl esters; styrenes such as styrene and α-methylstyrene; nitrile-containing monomers; (meth)acrylamides; vinyl ethers such as methyl vinyl ether, ethyl vinyl ether; N-substituted maleimides; dienes such as butadiene, isoprene and others; vinyl pyridine; and any combination thereof.

In a further embodiment the ethylenically unsaturated monomers may comprise a lactone according to formula (1) as an additional monomer: 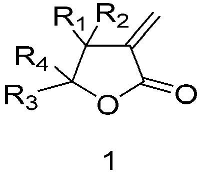 wherein each of R₁, R₂, R₃, R₄, separately from one another, is selected from the group consisting of H and an alkyl group. The alkyl group preferably contains 1-4 carbon atoms. Particularly preferred alkyl groups are methyl and ethyl. More preferably, each of R₁, R₂, R₃, R₄, separately from one another, is selected from the group consisting of H and CH₃.

In preferred embodiments, R1, R₂, R₃, and R₄ in formula (1) are selected as follows:
R₁ = H, R₂ = H, R₃ = CH₃, R₄ = H (a-methylene-γ-valerolactone (MVL), same as γ-methyl-α-methylene-γ-butyrolactone),
R₁ = H, R₂ = H, R₃ = H, R₄ = H (α-methylene-γ-butyrolactone (MBL)),
R₁ = CH₃, R₂ = H, R₃ = H, R₄ = H (β-methyl-a-methylene-γ-butyrolactone (MMBL)), or
R₁ = H, R₂ = H, R₃ = CH3, R₄ = CH₃ (γ,γ-dimethyl-α-methylene-γ-butyrolactone).

If the ethylenically unsaturated monomers comprise a lactone according to formula (1), the lactone is most preferably either MVL or MBL.

In a further embodiment the ethylenically unsaturated monomers may comprise an itaconate dialkylester according to formula (2) as an additional monomer: 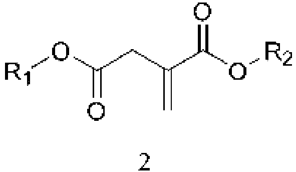 wherein each of R₁ and R₂, separately from one another, is an alkyl group preferably with 1-4 carbon atoms. Suitable alkyl groups include methyl, ethyl, n-propyl, isopropyl and butyl groups. Particularly, the itaconate dialkylester is preferably selected from the group consisting of dimethyl itaconate (DMI), diethyl itaconate (DEI), di(n-propyl) itaconate, diisopropyl itaconate, dibutyl itaconate (DBI).

In a further embodiment the ethylenically unsaturated monomers may comprise a monomer of Formula (3) as an additional monomer: 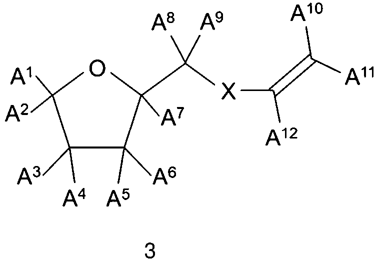 wherein each of A¹ to A¹² are independently selected from H and C₁ to C₄ alkyl, in which each C₁₋₄ alkyl group can optionally be substituted with one or more substituents selected from halogen, hydroxyl and C₁₋₄ alkoxy, , X is a linking group selected from -O-, -NR"-, -S-, -OC(O)-, -NR"C(O)-, -SC(O)-, -C(O)O-, -C(O)NR"-, and -C(O)S-, wherein the group C(O) represents a carbonyl group, C=O, R" is H or C₁₋₂ alkyl optionally substituted with one or more substituents selected from halogen and hydroxy. If the ethylenically unsaturated monomers comprise a monomer of Formula (3), in a preferred embodiment, A¹² is H. In another preferred embodiment A¹² is selected from C₁ to C₄ alkyl which can optionally be substituted with one or more substituents selected from halogen, hydroxy and C₁₋₄ alkoxy, and preferably is methyl. Most preferably, if the ethylenically unsaturated monomers comprise a monomer of Formula (3), the monomer of Formula (3) is tetrahydrofurfuryl (meth)acrylate or tetrahydrofurfuryl acrylate.

In a further preferred embodiment, the ethylenically unsaturated monomers comprise small amounts of one or more crosslinking multifunctional monomers, such as one or more of divinyl benzene, ethylene glycol di(meth)acrylate, di(ethylene glycol) di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3- butanediol di(meth)acrylate, neopentyl glycol di(meth)acrylate, 1,10-decanediol di(meth)acrylate, pentaerythritol tri(meth)acrylate, pentaerythritol tetra(meth)acrylate, dipentaerythritol hexa(meth)acrylate, triallylformal tri(meth)acrylate, allyl methacrylate, trimethylol propane tri(meth)acrylate, tributanediol di(meth)acrylate, PEG #200 di(meth)acrylate, PEG #400 di(meth)acrylate, PEG #600 di(meth)acrylate, 3- acryloyloxyglycol monoacrylate, triacryl formal, triallyl isocyanate, triallyl isocyanurate etc. Particularly preferred are crosslinking monomers that are at least tri-functional, examples of which include pentaerythritol tri(meth)acrylate, pentaerythritol tetra(meth)acrylate, dipentaerythritol hexa(meth)acrylate, triallylformal tri(meth)acrylate, trimethylol propane tri(meth)acrylate, triacryl formal, triallyl isocyanate and triallyl isocyanurate. The amounts of crosslinking functional monomers may, for example, be from 0.1 to 6 weight% or from 0.1 to 1 weight% or from 1 to 3 weight% of the ethylenically unsaturated monomers, 0.1 to 1 weight% being particularly preferred in case the one or more multifunctional monomers are at least tri-functional and 1 to 3 weight% being particularly preferred in case the one or more multifunctional monomers are di-functional. If ethylenically unsaturated monomers other than acrylonitrile, methacrylonitrile, methyl acrylate and/or methyl methacrylate and mixtures thereof, and one or more crosslinking multifunctional monomers, are included, the amount thereof is preferably from 0 to 6 weight%, most preferably from 0 to 5 weight%. Examples of such other kinds of monomers that may be included are nitrile containing monomers such as α-ethoxyacrylonitrile, fumaronitrile or crotonitrile; vinyl pyridine; vinyl esters such as vinyl acetate; styrenes such as styrene, halogenated styrenes or α-methyl styrene; dienes such as butadiene, isoprene and chloroprene; unsaturated carboxylic compounds like acrylic acid, methacrylic acid and salts thereof; or other unsaturated monomers like acrylamide, methacrylamide or N- substituted maleimides.

In some embodiments, the ethylenically unsaturated monomers used for preparing the thermoplastic thermally expandable microspheres of the present invention comprise less than 5 weight%, preferably less than 2 weight%, and even more preferably less than 1 weight% halogen-containing monomers, the weight% being based on the total weight of the ethylenically unsaturated monomers. In some embodiments, the ethylenically unsaturated monomers are substantially free of halogen-containing monomers.

In a further preferred embodiment, the ethylenically unsaturated monomers substantially consist of acrylonitrile, methacrylonitrile, methyl acrylate and/or methyl methacrylate and mixtures thereof, and optionally one or more crosslinking multifunctional monomers, each monomer in the respective amounts as specified above. In a particular embodiment, the ethylenically unsaturated monomers substantially consist of acrylonitrile, methacrylonitrile, methyl acrylate and/or methyl methacrylate and mixtures thereof, and one or more crosslinking multifunctional monomers, each monomer in the respective amounts as specified above. In a further particular embodiment, the ethylenically unsaturated monomers substantially consist of acrylonitrile, methacrylonitrile, methyl acrylate, and one or more crosslinking multifunctional monomers, each monomer in the respective amounts as specified above.

The thermoplastic thermally expandable microspheres are hollow, in which the shell comprises the polymer made from the above described ethylenically unsaturated monomers, and the hollow center or core comprises one or more propellant. In the expanded microspheres, the density is typically less than 1 g/cm³, and is suitably in the range of from 0.005 to 0.8 g/cm³, or from 0.01 to 0.6 g/cm³. In further embodiments, the density of the expanded microspheres is in the range of from 0.01 to 0.4 g/cm³. Higher densities, particularly densities of 1 g/cm³ or more, generally mean that the microsphere samples are not suitable for use.

The propellant comprises or consists of one or more volatile compounds having a boiling point of less than -5°C. The amount of the one or more volatile compounds in the propellant is preferably from 50 to 100 weight%, most preferably from 75 to 100 weight%, such as from 75 to 99 weight%, The propellant is preferably a hydrocarbon or mixture of hydrocarbons , wherein at least one of the hydrocarbons has a boiling temperature at atmospheric pressure of less than -5°C, preferably within the range from -50 to -10 °C, most preferably from -20 to - 10 °C. The propellant may consist substantially of at least one of methane, ethane, propane, and isobutane, but may also additionally comprise one or more other hydrocarbons, for example in an amount from 0 to 50 weight% of the propellant. Examples of such hydrocarbons include, n-pentane, isopentane, cyclopentane, hexane, isohexane, neo-hexane, cyclohexane, heptane, isoheptane, octane and isooctane. Aside from them, other hydrocarbon types can also be used, such as petroleum ether, or chlorinated or fluorinated hydrocarbons, such as methyl chloride, methylene chloride, dichloroethane, dichloroethylene, trichloroethane, trichloroethylene, trichlorofluoromethane, perfluorinated hydrocarbons, fluorine containing ethers, etc. In a preferred embodiment, the propellant comprises at least one of propane, isobutane, and n-butane, alone or in a mixture with one or more other hydrocarbons. More preferred is that the propellant consists of at least one of propane or isobutane. Even more preferred is that the propellant comprises or consists of isobutane. Most preferably, the propellant consists of isobutane. The amount of isobutane in the propellant is preferably from 50 to 100 weight%, most preferably from 75 to 100 weight%, such as from 75 to 99 weight%.

For the avoidance of any doubt, as used herein, the term "boiling point" refers to the temperature at which a substance transitions from a liquid to a gas at an absolute external pressure of 1 atmosphere (101.325 kPa; 760 mmHg), i.e., atmospheric pressure at sea level. Persons skilled in the art are routinely capable of determining the boiling point of a volatile compound.

The thermoplastic thermally expandable microspheres comprise the propellant in an amount of at least 21 weight%, based on the total weight of the thermoplastic thermally expandable microsphere. Preferably, the thermoplastic thermally expandable microspheres comprise the propellant in an amount of 22 to 35 weight%, such as from 23 to 30 weight%, and most preferably from 24 to 28 weight%, based on the total weight of the thermoplastic thermally expandable microspheres.

The determination of the weight of propellant in microspheres can be achieved by measuring the volatile content of the microspheres (i.e. the weight of volatiles, i.e. propellant, encapsulated in the microspheres). Hence, the terms "weight of propellant" or "weight percentage of propellant" as used herein in the context of microspheres are considered equivalent and are used interchangeably. The determination of the volatile content of microspheres is well-known by the skilled person and in principle any suitable method for determining the volatile content of microspheres can be used.

For instance, the propellant content of the microspheres can be determined using gas chromatography techniques. In such technique, microspheres are placed in a sealed gas-tight vial and heated to liberate the encapsulated propellant. A sample of the gas phase is introduced in the gas chromatograph in which the content of specified hydrocarbons is quantified.

In the present invention, the temperature at which the thermally expandable microspheres start to expand, T_{Start}, is not particularly limited. For instance, the thermally expandable microspheres may have a T_{Start} of from 50 °C to less than 150 °C. However, it is preferred that the microspheres can be expanded using an aqueous wet process. Hence, it is preferred that T_{Start} is from 60 to 120 °C, such as from 70 to 110 °C or from 80 to 105 °C. The temperature at which expansion starts is called T_{Start}, while the temperature at which maximum expansion is reached is called Tₘₐₓ. T_{Start} and Tₘₐₓ may be determined using standard measuring techniques as commonly known by the skilled person. For instance, T_{Start} and Tₘₐₓ can be determined in a temperature ramping experiment, by using for example a Mettler-Toledo Thermomechanical Analyser, such as Mettler-Toledo TMA/SDTA 2+, using a heating rate of 20 °C/min and a load (net.) of 0.06 N. In such a temperature ramping experiment, a sample of known weight of the thermally expandable microspheres is heated with a constant heating rate of 20 °C/min under a load (net.) of 0.06 N. When expansion of the thermally expandable microspheres starts, the volume of the sample increases and moves the load upwards. From such measurement, an expansion thermogram is obtained wherein the ordinate indicates the height of moving the load upwards and the abscissa indicates the temperature. T_{Start} and Tₘₐₓ can be determined from this expansion thermogram for instance by using STARe software from Mettler-Toledo.

In a further preferred embodiment, the thermoplastic thermally expandable microspheres have an average mean particle size from 5 to 30 µm, preferably from 7 to 28 µm, more preferably from 8 to 25 µm, and most preferably from 10 to 20 µm. It has been found that when using the specific combination of monomers and amounts thereof for the polymer shell and the propellant amount, such quite low average mean particle size are particularly suitable to obtain expandable microspheres which readily expand, have excellent barrier properties, and after expansion have good storage stability.

In further embodiments, the polymer shell can comprise particles to improve the mechanical properties and gas barrier of the polymer shell, thus acting as polymer shell enhancers. Examples of such particles are talc, montmorillonite, nanocrystalline cellulose and various types of clay, such as bentonite.

It has been found that the thermally expandable microspheres of the present disclosure also require the presence of a silica, preferably a colloidal silica. It was found that using Mg(OH)₂ as the suspending agent (cf. WO 2007/091960) resulted in expansion of the microspheres at 110°C, but when the microspheres were tested in paper and board applications it was found that the microspheres comprising Mg(OH)₂ were not retained in the final product (thereby rendering them completely unsuitable for use in paper and board applications). Replacing the Mg(OH)₂ agent with a silica resulted in excellent expansion of the microspheres at 110 °C and also resulted in excellent retention of the microspheres in the paper/board products. The microspheres of the present disclosure are therefore particularly suitable for use in paper and board applications.

The silica can either be used in an unmodified "bare" form, or optionally can be surface modified to tailor its hydrophobic/hydrophilic characteristics, for example using organosilane-modified silica or colloidal silica.

Preferred are the surface-modified silicas or colloidal silicas, preferably the organosilane-modified silicas or organosilane-modified colloidal silicas.

In embodiments, an "organo" group in the organosilane can be selected from C₁₋₂₀ alkyl, C₁₋₂₀ alkenyl, C₅₋₆ aryl, and C₅₋₆ heteroaryl with one or more (e.g. 1 to 3) heteroatoms selected from O, S and N. Each of these groups can optionally be substituted with one or more groups selected from halide, hydroxy, epoxy, thiol, amino, C₁₋₂₀ alkylamino, di-C₁₋₂₀ alkylamino, hydroxyamino, hydroxy-C₁₋₂₀ alkylamino, (hydroxy-C₁₋₂₀ alkyl)(C₁₋₂₀ alkyl)amino, di(hydroxy-C₁₋₂₀ alkyl)amino C₁₋₂₀ alkoxy, C₁₋₂₀ amido, C₁₋₂₀ ureido, C₁₋₂₀ mercapto, C₃₋₂₀ epoxyalkoxy, C₁₋₂₀ alkylacrylate, ethylene glycol or oligomers thereof with 1 to 20 ethylene glycol groups, and propylene glycol or oligomers thereof with 1 to 20 propylene glycol groups. Any aliphatic groups can be linear, branched or cyclic.

The organosilane modified silica or colloidal silica can be produced by reacting silica (or colloidal silica) with an organosilane compound, typically having the formula RₙSiX₄₋ₙ, where R is one of the above-identified organic groups, X is a halide, hydroxy or C₁₋₆ alkoxy, and n is an integer in the range of from 1 to 3, typically 1 or 2.

Suitable silane compounds include tris-(trimethoxy)silane, octyl triethoxysilane, methyl triethoxysilane, methyl trimethoxysilane; gamma-mercaptopropyl trimethoxysilane, beta-(3,4-epoxycyclohexyl)-ethyl trimethoxysilane; silanes containing an epoxy group (epoxy silane), glycidoxy and/or a glycidoxypropyl group such as gamma-glycidoxypropyl trimethoxysilane, gamma-glycidoxypropyl methyldiethoxysilane, (3-glycidoxypropyl)trimethoxy silane, (3-glycidoxypropyl) hexyltrimethoxy silane, beta-(3,4-epoxycyclohexyl)-ethyltriethoxysilane; silanes containing a vinyl group such as vinyl triethoxysilane, vinyl trimethoxysilane, vinyl tris-(2-methoxyethoxy)silane, vinyl methyldimethoxysilane, vinyl triisopropoxysilane; gamma-methacryloxypropyl trimethoxysilane, gamma-methacryloxypropyl triisopropoxysilane, gamma-methacryloxypropyl triethoxysilane, octyltrimethyloxy silane, ethyltrimethoxy silane, propyltriethoxy silane, phenyltrimethoxy silane, 3-mercaptopropyltriethoxy silane, cyclohexyltrimethoxy silane, cyclohexyltriethoxy silane, dimethyldi ethyoxy silane, 3-chloropropyltriethoxy silane, 3-methacryloxypropyltrimethoxy silane, i-butyltriethoxy silane, trimethylethoxy silane, phenyldimethylethoxy silane, hexamethyldisiloxane, trimethylsilyl chloride, vinyltriethoxy silane, hexamethyldisilizane, and mixtures thereof. US4927749 discloses further suitable silanes which may be used.

Examples of silica that can be used include those sold under the Levasil^{™}, Bindzil^{™} and Ludox^{™} trade names, which are associated with colloidal silica. Solid forms of silica include fumed silica and precipitated silica can also be used, which can be dispersed in water to form a fine suspension. Sources of fumed silica include those sold under the trade names Cab-o-Sil^{™} and Aerosil^{™}.

Apart from the polymer shell, the propellant, and the silica, the microspheres may comprise further substances added during the production thereof, normally in an amount from 0 to 20 weight%, preferably from 1 to 10 weight%. Non-limiting examples of such substances are solid suspending agents, such as one or more of starch, crosslinked polymers, gum agar, derivated cellulose like for example methyl cellulose, hydroxypropyl methylcellulose, hydroxyethyl cellulose and carboxy methylcellulose. If present, these solid suspending agents are normally mainly located to the outer surface of the polymer shell. However, even if a suspending agent has been added during the production of the microspheres, this may have been washed off at a later stage and could thus be substantially absent from the final product.

A number of factors can result in high densities. For example, high density can result from poor microsphere yield, i.e. the percentage of microspheres in the polymeric material is too low to reduce the overall density to an acceptable level. Another issue is poor expansion characteristics, which can arise where too many of the microspheres contain insufficient propellant to enable adequate expansion. This can result from the polymer shell being too permeable to the propellant, or due to the formation of so-called "multiple core" microspheres where, instead of a single propellant -containing core, there are multiple propellant -containing cores within the shell (e.g. like a microspherical foam or sponge). In such multi-core microspheres, the propellant concentration is typically too low to reduce the density adequately. Another cause is aggregation or agglomeration of the polymer, resulting in poor microsphere production and a denser material. Too high a proportion of aggregated material or poorly expanding microspheres can also lead to large inhomogeneity in the expansion characteristics of the resulting microsphere product. This is particularly unfavorable for surface-sensitive applications such as coatings, where a smooth finish is desirable.

The present disclosure also provides a process for preparing thermoplastic thermally expandable microspheres comprising a polymer shell and a propellant, comprising polymerizing ethylenically unsaturated monomers in the presence of a propellant in a polymerization mixture, wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 12 to 25 weight%, and wherein the propellant comprises at least one of propane, isobutane, and n-butane and is present in an amount of at least 25 weight%, based on the total weight of the ethylenically unsaturated monomers and the propellant. This process can be used to prepare the thermoplastic thermally expandable microspheres according to the first aspect of the present invention.

The process comprises polymerizing ethylenically unsaturated monomers as described above in a preferably aqueous suspension in the presence of a propellant as described above to yield microspheres comprising a polymer shell encapsulating said propellant. Regarding the kinds and amounts of monomers, as well as of any further additives already mentioned above, such as crosslinkers, etc., the above description of the expandable microspheres equally applies also to the process of this second aspect of the present invention.

In the process according to the second aspect of the invention, the propellant comprises at least one of propane, isobutane, and n-butane, for instance in an amount of from 50 to 100 weight% or from 50 to 99 weight% of the total propellant amount. In some embodiments, the propellant consists of propane, isobutane, n-butane, and mixtures thereof. In a preferred embodiment, the propellant comprises isobutane, for instance in an amount of from 50 to 100 weight% or from 50 to 99 weight% of the total propellant amount. In a particularly preferred embodiment, the propellant consists of isobutane.

In the process according to the second aspect of the invention, the propellant is present in the polymerization mixture in an amount of at least 25 weight%, such as about 26-40 weight%, or about 27-35 weight%, based on the total weight of the ethylenically unsaturated monomers and the propellant.

In principle, any known general method for preparing expandable microspheres can be used. Suitable methods include for instance suspension polymerization. For instance, the process can follow the processes as described in US Patent 3615972 or WO 2019/043235 A1.

In an embodiment of the invention the microspheres are produced in a batchwise process and the polymerization may then be conducted as described below in a reaction vessel. For 100 parts by weight of monomer phase (suitably including monomers and propellant, the proportions of which determine proportions of monomers in the polymer shell and the amount of propellant in the final product), one or more polymerization initiator, preferably in an amount from 0.1 to 5 parts by weight, aqueous phase, preferably in an amount from 100 to 800 parts by weight, and one or more silica suspending agents, preferably in an amount from 1 to 20 parts by weight, are mixed and homogenized. The size of the droplets of the monomer phase obtained determines the size of the final expandable microspheres. The temperature is suitably maintained from 40 to 90 °C, preferably from 50 to 80 °C, while the pH is preferably from 1 to 6, most preferably from 3 to 5.

The silica suspending agent helps to stabilize droplets of the ethylenically unsaturated monomers containing organic phase in the aqueous phase, and in embodiments assists in the formation of an emulsion of the organic phase in the aqueous phase (i.e. an oil-in-water type emulsion). As noted above, the presence of a silica is also critical to achieving the desired paper and board application properties of the expandable microspheres.

The silica suspending agent is typically present in an amount of up to 20 weight%, for example from 0.01 to 20 weight%, from 0.05 to 10 weight%, of from 0.1 to 5 weight% in the aqueous phase. In further embodiments, the silica suspending agent is present in an amount of from 0.1 to 1 weight% in the aqueous phase.

In order to enhance the effect of the suspending agent, it is also possible to add small amounts of one or more promoters, for example from 0.001 to 1 weight%. Usually, such promoters are organic materials and may, for example, be selected from one or more of water-soluble sulfonated polystyrenes, alginates, carboxymethylcellulose, tetramethyl ammonium hydroxide or chloride or water-soluble complex resinous amine condensation products such as the water-soluble condensation products of diethanolamine and adipic acid, the water-soluble condensation products of ethylene oxide, urea and formaldehyde, polyethylenimine, polyvinylalcohol, polyvinylpyrrolidone, polyvinylamine, amphoteric materials such as proteinaceous, materials like gelatin, glue, casein, albumin, glutin and the like, non-ionic materials like methoxycellulose, ionic materials normally classed as suspending agents, such as soaps, alkyl sulfates and sulfonates and long chain quaternary ammonium compounds. Inorganic promoters, such as, but not limited to, iron nitrate, may be used as the promoter.

Conventional radical polymerization may be used and initiators are suitably selected from one or more of organic peroxides such as dialkyl peroxides, diacyl peroxides, peroxy esters, peroxy dicarbonates, or azo compounds. Suitable initiators include dicetyl peroxydicarbonate, di(4-tert-butylcyclohexyl) peroxydicarbonate, di(2-ethylhexyl) peroxydicarbonate, dioctanoyl peroxide, dibenzoyl peroxide, dilauroyl peroxide, didecanoyl peroxide, tert-butyl peracetate, tert-butyl perlaurate, tert-butyl perbenzoate, tert-butyl hydroperoxide, cumene hydroperoxide, cumene ethyl peroxide, diisopropylhydroxy dicarboxylate, 2,2'-azobis(2,4-dimethyl valeronitrile), 2,2'-azobis(isobutyronitrile), 1,1'-azobis(cyclohexane-1-carbonitrile), dimethyl 2,2'-azobis(2-methylpropionate), 2,2'-azobis[2-methyl-N-(2- hydroxyethyl)propionamide] and the like. It is also possible to initiate the polymerization with radiation, such as high energy ionizing radiation.

If appropriate, the microspheres may at any stage be treated to reduce the amount of residual unreacted monomers, for example by any of the procedures described in WO 2004/072160 or US 4287308.

In a further aspect, the present disclosure is also directed to an aqueous slurry comprising expandable thermoplastic microspheres according to the first aspect of the present invention as described above or obtained by the method as described above, preferably in an amount from 5 to 55 weight%, most preferably from 20 to 55 weight%, based on the total weight of the slurry. Such a slurry is useful for various applications of the expandable microspheres, including e.g. paper making. The slurry preferably also comprises at least one thickener, preferably compatible with paper making. Examples of such thickeners include at least partially water soluble polymers selected from the group consisting of starch, gums, celluloses, chitins, chitosans, glycans, galactans, pectins, mannans, dextrins, co-polymers made from monomers comprising acrylic acid or salts thereof (preferably up to 50 mol%, most preferably up to 20 mol% acrylic acid or salt thereof), homo- and co-polymers made from monomers comprising esters or amides of acrylic acid, homo and co-polymers made from monomers comprising methacrylic acid, esters or amides thereof, rubber latexes, and copolymers, polyvinyl esters and co-polymers (e.g. with ethylene), polyvinyl alcohol, polyamines, polyetyleneimine, polyethylene/ polypropylene oxides, polyurethane, and aminoplast and phenoplast precondensates such as urea/ formaldehyde, urea/ melamine/ formaldehyde or phenol/ formaldehyde and polyamidoamine epichlorohydrin resins. Examples of suitable gums include guar gums, tamarind gums, locust bean gums, tare gums, karaya, okra, acacia, xanthan gums etc. and mixtures thereof, of which guar gums are particularly preferred. Examples of suitable celluloses include derivatives such as optionally chemically modified CMC (carboxymethyl cellulose) and cellulose ethers like EHEC (ethyl hydroxyethyl cellulose) and HEC (hydroxyethyl cellulose), and mixtures thereof. Chemically modified cellulose derivatives include, for example, those modified with various functional groups such as quaternary amines, other amines, sulphates, sulphonates, phosphates, phosphonates, polyethylene oxide and polypropylene oxide.

The at least partially water soluble polymer can be straight chained, branched or cross-linked. The average molecular weight can vary within wide limits, depending on the kind of polymer. In most cases the preferred average molecular weight is at least 500, more preferably at least 2000 and most preferably at least 5000. The upper limit is not critical and in most cases the average molecular weight is preferably up to 50 000 000, more preferably up to 10 000 000, most preferably up to 1 000 000.

Particularly preferred polymers include starch, CMC, EHEC, Guar gum, polyamidoamine epichlorohydrin resins, co-polymers of acrylic acid with other monomers (e.g. with acrylamide), and homo- or co-polymers of polyacrylamides, polyamine, polyvinyl alcohol and polyethylene/ polypropylene oxides.

One or more at least partially water soluble polymers effective as thickener are preferably present in an amount to stabilize the slurry against substantial sedimentation or flotation of the microspheres to an extent that they cannot be re-dispersed again. In many cases this can be achieved by adding sufficient polymer to obtain a preferred viscosity of the slurry from about 150 to about 1000 mPas at 25 °C, most preferably from about 200 to about 600 mPas at 25 °C (refers to measurement with an Anton Paar DV-1P viscosimeter equipped with a spindle L3). The amount required to stabilize the slurry depends on the polymer and other circumstances such as the pH. In many cases a preferred content of at least partially water soluble polymer in the slurry is from about 0.1 to about 15 weight%, most preferably from about 0.1 to about 10 weight%, particularly most preferably from about 0.5 to about 10 weight%.

### Examples

The following examples are intended to illustrate the invention.

The propellant content in the microspheres was determined using headspace gas chromatography (HS-GC) using an Agilent 7697A static headspace connected to an Agilent 7890B gas chromatograph. 8 to 10 mg of sample is placed in a sealed gas-tight vial and heated to 170 °C. A sample of the gas phase is introduced in the gas chromatograph equipped with a CP-Sil 19 cb column (length 30 m, inner diameter 0.32 mm, film thickness 1 µm, manufactured by Agilent) by a gas-tight syringe. Isooctane is used as the reference and evaluation is performed using the Chromeleon software from Thermo.

The TMA expansion characteristics were evaluated using a Mettler TMA/SDTA 2+ thermomechanical analyzer, interfaced with a PC running STARe software. The sample to be analyzed was prepared from 0.5 mg (+/- 0.02 mg) of the thermally expandable microspheres contained in an aluminum oxide crucible with a diameter of 6.8 mm and a depth of 4.0 mm. The crucible was sealed using an aluminum oxide lid with a diameter of 6.1 mm. Using a TMA Expansion Probe type, the temperature of the sample was increased from about 30 °C to 240 °C with a heating rate of 20 °C min⁻¹ while applying a load (net.) of 0.06 N with the probe. The displacement of the probe vertically was measured to analyze the expansion characteristics. Initial temperature of expansion (Tₛₜₐᵣₜ): the temperature (°C) when displacement of the probe is initiated. The maximum temperature of expansion (Tₘₐₓ) is the temperature (°C) when displacement of the probe reaches its maximum. The TMA density is the sample weight (d) divided by volume increase of the sample (dm³) when displacement of the probe reaches its maximum.

The particle size was determined by laser light scattering on a Malvern Mastersizer Hydro 3000 SM apparatus on wet samples. The mean particle size is presented as the volume median diameter d(0.5).

### Example 1:

A dispersion comprising 329 parts by weight of water, 22.7 parts by weight of 50 weight% organosilane-surface-modified colloidal silica (Levasil CC503, Nouryon) was prepared and maintained at a pH of about 4.5. The aqueous dispersion was mixed with an organic phase that contained 1.6 parts by weight of dilaurylperoxide, 17.5 parts by weight of isobutane, 60.0 parts by weight of acrylonitrile, 25.0 parts by weight of methacrylonitrile, 15.0 parts by weight of methyl acrylate and 0.3 parts by weight of trimethylolpropane trimethacrylate. After addition of 0.75 parts of 14.3 weight% solution of iron nitrate, polymerization was performed at 62 °C in a sealed reactor under agitation. After cooling to room temperature a sample of the obtained microsphere slurry was removed, filtered, dewatered, and dried prior to analysis by TMA and headspace gas chromatography. The microspheres contained about 15.1 weight%, based on the total weight of the microspheres, isobutane and had a mean particle size of about 13 µm. The TMA results can be found in Table 1 below.

### Examples 2 and 3:

Further microspheres were prepared in additional polymerization examples which were performed in the same manner as in Example 1. However, in these further examples monomers, and propellant were used in the amounts as specified in Table 1 below.

**Table 1: Analytical results for Experiments 1-3 and amounts of different chemicals used**

| | Examples | | |
|---|---|---|---|
| | 1* | 2 | 3* |
| AN | 60 | 60 | 60 |
| MAN | 25 | 25 | 10 |
| MA | 15 | 15 | 30 |
| IB** | 17.5 | 27.5 | 27.5 |
| Propellant [weight%]⁺ | 15.1 | 24.1 | 24.1 |
| Particle size [µm] | 13.0 | 13.5 | 13.1 |
| Tₛₜₐᵣₜ [°C] | 103 | 101 | 94 |
| Tₘₐₓ [°C] | 157 | 165 | 146 |
| TMA-density [g/L] | 9.3 | 6.8 | 11.0 |

| | | | |
|---|---|---|---|
| All amounts are expressed in parts per weight unless stated otherwise AN: acrylonitrile MAN: methacrylonitrile MA: methyl acrylate IB: isobutane * comparative example ** charged amount in weight% based on the total weight of monomer and propellant ⁺ based on total weight of expanded microspheres | | | |

### Average Expansion Factor Protocol

The average expansion factor for the thermally expandable microspheres was determined according to the following protocol:
Step 1. 500 µl of a microsphere slurry prepared in accordance with Example 1 was transferred to a 20 ml gas chromatography vial (GC-vial) by pipette, after which the vial was capped with a crimp cap. All caps were perforated to avoid excessive pressure in the vial during the subsequent heating step.
Step 2. The vials were pre-heated in a gas chromatography oven (GC-oven) at 60 °C for 10 min, after which the temperature was raised over a time span of 3 minutes to a final temperature of 110 °C. The temperature of the GC-oven was rapidly lowered back to 60 °C once the heating sequence was finished.
Step 3.The vials were removed from the GC-oven when the temperature of the GC-oven was down to 60 °C, and further cooled at ambient temperature.
Step 4. After removal of the crimp cap, the volume of the expanded samples was determined gravimetrically based on Archimedes principle. The GC-vials (containing the expanded sample) were filled to the top with isooctane and the sample volume was determined from the volume of the vial, in combination with the mass of isooctane added to the vial. The volume measurement was performed under standard laboratory conditions (20 °C, 1 atm). An expansion factor (unitless) was calculated using equation (1). $Expansion factor = \frac{{V}_{vial} - \left(\frac{{m}_{IO}}{0.69}\right)}{0.5}$ (1)
Wherein Vᵥᵢₐₗ is the volume of the empty GC-vial and m_{IO} is the mass (in grams) of isooctane added to the vial containing the expanded samples. For the purposes of the calculations, a density for isooctane of 0.69 g/mL is assumed (literature value), and the 0.5 factor corresponds to the original volume of the slurry (500 µl = 0.5 mL; the 0.5 factor is adjusted accordingly if a different original volume (e.g., 0.5±0.1 mL) of slurry is used). Thus, if there is no expansion, then Vᵥᵢₐₗ - (m_{IO}/0.69) = 0.5, hence the expansion factor will be 1. To ensure accuracy, the expansion factor is expressed as the average of four repeat examples ("average expansion factor").

Thermally expandable microsphere slurries obtained in Examples 1-3 were subjected to the above four-step procedure, and commercially available VDC-containing benchmark microspheres, Expancel 820 SLU 40, were also subjected to the above four-step procedure for comparative purposes (Example 4).

Prior to removal of the crimp cap in step 4, a qualitative evaluation was performed visually by inspecting the height of the foam in the GC-vial, which can be observed in the photographs presented in Figure 1 (**A** = Example 4 [*Expancel 820 SLU 40*]; **B** = Example 1; **C** = Example 2; **D** = Example 3). It is readily apparent that Example 2 (**C**) yielded the greatest expansion, even outperforming the VDC-containing benchmark (**A**) at 110 °C. Relative to Example 2, reducing the amount of propellant in the expandable microspheres to less than 21 weight% (Example 1) resulted in almost no observable expansion at 110 °C (**B**), and increasing the amount of methyl acrylate monomer in the polymer shell to greater than 25 weight% (Example 3) caused a notable reduction in the expansion properties of the expandable microsphere at 110 °C (**D**). Finally, replacing the silica component with Mg(OH)₂ (cf. WO 2007/091960) resulted in suitable expansion of the microspheres at 110 °C, but when the microspheres were tested in paper and board applications it was found that the microspheres comprising Mg(OH)₂ were not retained in the product (thereby rendering them completely unsuitable for use in paper and board applications), whereas the microspheres comprising the silica component were retained in the product, making them excellent candidates as direct replacements for the VDC-containing benchmark.

The results of the quantitative analysis according to the above "Expansion Factor Protocol" are shown in Table 2.

**Table 2.**

| **Example** | **Average Expansion Factor⁺** |
|---|---|
| 1* | 2.9 |
| 2 | 16.2 |
| 3* | 8.0 |
| 4* | 15.6 |

| | |
|---|---|
| * comparative example ⁺ average of four repeat examples | |

It has been demonstrated both qualitatively and quantitatively that the expandable microspheres of the present disclosure would be an excellent VDC-free replacement for the VDC-containing microspheres in paper and board applications.

### Propellant

Further studies found that the nature of the propellant is critical to the success observed in the preceding examples.

| | Examples | | |
|---|---|---|---|
| | 2 | 5* | 6* |
| AN | 60 | 60 | 60 |
| MAN | 25 | 25 | 25 |
| MA | 15 | 15 | 15 |
| Propellant | 27.5^{a} | 27.5^{b} | 27.5^{c} |
| Propellant [weight%]⁺ | 24.1 | 24.6 | 25.7 |
| Particle size [µm] | 13.5 | 19.1 | 12.8 |
| Tₛₜₐᵣₜ [°C] | 101 | 109 | 105 |
| Tₘₐₓ [°C] | 165 | 160 | 155 |
| TMA-density [g/L] | 6.8 | 6.5 | 10.2 |
| Average Expansion Factor^{§} | 16.2 | 2.1 | 1.4 |

| | | | |
|---|---|---|---|
| * comparative example ⁺ based on total weight of expanded microspheres ^{§} determined in accordance with the above protocol ^{a} propellant = isobutane ^{b} propellant = isopentane ^{c} propellant = n-butane | | | |

When switching from isobutane (boiling point of -11.8°C) to n-butane (boiling point of -0.5°C) or iso-pentane (boiling point of 27.8°C) the improvement in average expansion factor was lost (the difference in average expansion factor between comparative Examples 5 and 6 is not considered to be statistically significant; the only valid conclusion that can be drawn is that expansion failed for both [almost no observable expansion]). In view of the chemical similarities of isobutane and n-butane (isomeric C4 hydrocarbons), the logical deduction was that it was the boiling point that was key to the successful expansion. As such, it was concluded that, for successful expansion, the propellant requires a volatile component having a boiling point of less than -5°C.

In this specification, unless expressly otherwise indicated, the word 'or' is used in the sense of an operator that returns a true value when either or both of the stated conditions is met, as opposed to the operator 'exclusive or' which requires that only one of the conditions is met.

The word 'comprising' is used in the sense of 'including' rather than to mean 'consisting of'. All prior teachings acknowledged above are hereby incorporated by reference. No acknowledgement of any prior published document herein should be taken to be an admission or representation that the teaching thereof was common general knowledge in Europe or elsewhere at the date hereof.

## Claims

1. Thermoplastic thermally expandable microspheres comprising a polymer shell and a propellant, wherein the polymer shell is made from ethylenically unsaturated monomers and encapsulates the propellant, and wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 12 to 25 weight%, each based on the total weight of ethylenically unsaturated monomers, and wherein the thermoplastic thermally expandable microspheres comprise the propellant in an amount of at least 21 weight%, based on the total weight of the thermoplastic thermally expandable microspheres, wherein the thermally expandable microspheres comprise a silica, and wherein the propellant comprises or consists of one or more volatile compounds having a boiling point of less than -5°C.

2. The thermoplastic thermally expandable microspheres according to claim 1, wherein the ethylenically unsaturated monomers comprise acrylonitrile in an amount from 50 to 75 weight%, preferably from 53 to 70 weight%, and most preferably from 55 to 65 weight%, each based on the total weight of ethylenically unsaturated monomers.

3. The thermoplastic thermally expandable microspheres according to claim 1 or 2, wherein the ethylenically unsaturated monomers comprise methacrylonitrile in an amount from 15 to 40 weight%, preferably from 20 to 35 weight%, and most preferably from 22 to 30 weight% each based on the total weight of ethylenically unsaturated monomers.

4. The thermoplastic thermally expandable microspheres according to any of claims 1-3, wherein the ethylenically unsaturated monomers comprise methyl acrylate and/or methyl methacrylate in an amount from 13 to 23 weight%, each based on the total weight of ethylenically unsaturated monomers.

5. The thermoplastic thermally expandable microspheres according to any of claims 1-4, wherein the ethylenically unsaturated monomers comprises more methacrylonitrile than methyl acrylate and/or methyl methacrylate on a weight basis, preferably at least 1 weight% more methacrylonitrile than methyl acrylate and/or methyl methacrylate on a weight basis, even more preferably at least 1 weight% more methacrylonitrile than methyl acrylate and/or methyl methacrylate on a weight basis.

6. The thermoplastic thermally expandable microspheres according to any of claims 1-5, wherein the thermoplastic thermally expandable microspheres comprise the propellant in an amount of 22 to 35 weight%, preferably from 23 to 30 weight%, based on the total weight of the thermoplastic thermally expandable microspheres.

7. The thermoplastic thermally expandable microspheres according to any of claims 1-6, wherein the ethylenically unsaturated monomers comprise methyl acrylate.

8. The thermoplastic thermally expandable microspheres according to any of claims 1-7, wherein the ethylenically unsaturated monomers comprise less than 5 weight%, preferably less than 2 weight%, and even more preferably less than 1 weight% halogen-containing monomers.

9. The thermoplastic thermally expandable microspheres according to any of claims 1-8, wherein the propellant comprises at least one of propane and isobutane, preferably isobutane, preferably 50 to 100 weight% isobutane.

10. The thermoplastic thermally expandable microspheres according to any of claims 1-9, wherein the silica is a surface-modified silica or surface-modified colloidal silica, preferably a surface-modified colloidal silica, preferably an organosilane-modified colloidal silica.

11. The thermoplastic thermally expandable microspheres according to any of claims 1-10, wherein the ethylenically unsaturated monomers further comprises from 0.1 to 6.0 weight% of one or more crosslinkers, preferably from 0.2 to 1.0 weight%, each based on the total weight of ethylenically unsaturated monomers.

12. Process for preparing thermoplastic thermally expandable microspheres comprising a polymer shell and a propellant, comprising polymerizing ethylenically unsaturated monomers in the presence of a silica suspending agent and a propellant in a polymerization mixture, wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 12 to 25 weight%, each based on the total weight of ethylenically unsaturated monomers, and wherein the propellant comprises or consists of one or more volatile compounds having a boiling point of less than -5°C and is present in an amount of at least 25 weight%, based on the total weight of the ethylenically unsaturated monomers and the propellant.

13. Aqueous slurry comprising the thermoplastic thermally expandable microspheres according to any of claims 1-11.

14. Expanded thermoplastic microspheres obtained by heating the thermoplastic thermally expandable microspheres according to any of claims 1-11 or the aqueous slurry of claim 13 at a temperature of about 100 'C to about 120 °C, preferably about 105 °C to about 115 °C, such as about 110 °C.

15. A paper or board product comprising the thermoplastic thermally expandable microspheres according to any one of claims 1-11 or the expanded thermoplastic microspheres according to claim 14.
